# FASCICULE DE BREVET EUROPEEN

(11) **EP 1 053 160 B1**
(45) Date de publication et mention de la délivrance du brevet: **15.09.2004**
(21) Numéro de dépôt: 99901698.3
(22) Date de dépôt: 03.02.1999
(51) Int. Cl.: B62D 1/04, B62D 5/04

(54) **ARMATURE DE VOLANT A CAPTEUR DE COUPLE INTEGRE OU RAPPORTE POUR DISPOSITIF DE DIRECTION DE VEHICULE**
LENKRADSKELETT MIT ANGESETZTEM ODER INTEGRIERTEM DREHMOMENTSENSOR FÜR EINE FAHRZEUGLENKUNG
STEERING WHEEL ARMATURE WITH INTEGRATED OR DIRECTLY MOUNTED TORQUE SENSOR FOR VEHICLE STEERING DEVICE

(30) Priorité: 04.02.1998 FR 9801294
(43) Date de publication de la demande: 22.11.2000
(73) Titulaire: S.N.R. ROULEMENTS, 74010 Annecy Cédex (FR)
(72) Inventeur: NICOT, Christophe, F-74330 Epagny (FR)
(74) Mandataire: Keib, Gérard
(86) Numéro de dépôt international: PCT/FR1999/000225
(87) Numéro de publication internationale: WO 1999/039962

(56) Documents cités:
- EP-A- 0 442 091
- EP-A- 0 691 254
- EP-A- 0 726 185
- EP-A- 0 775 624
- WO-A-96/25300
- WO-A-97/08527
- FR-A- 2 478 004
- FR-A- 2 718 699

## Description

L'invention est relative au domaine technique des volants de braquage de véhicules.

L'invention concerne plus particulèrement les volants dynamométriques.

Par volant de direction ou volant de braquage, on désigne un organe de commande manuelle relié aux roues directrices et utilisé par le conducteur pour diriger le véhicule.

Conventionnellement, le volant de direction est relié aux roues directrices par une colonne de direction, c'est-à-dire un élément tubulaire, fixé à la carrosserie, sous le tableau de bord, qui guide et supporte l'arbre de transmission relié au volant de direction.

Cette colonne de direction est associée à un boîtier de direction, par exemple une crémaillère, transformant le mouvement circulaire du volant de direction en déplacement angulaire de la bielle pendante qui provoque le braquage des roues.

L'invention concerne également les volants de direction intégrés dans le dispositif de direction dans lesquels les roues ne sont pas liées par une série d'éléments mécaniques avec le volant.

Les volants de direction sont conventionnellement constitués d'une jante torique raccordée par au moins un bras de liaison à un moyeu coopérant avec l'arbre de direction.

L'on peut se référer, par exemple, aux documents suivants : EP-726 185, EP-691 254, EP-504 963, EP-412 605, EP-465 296, EP-390 001, EP-368 386, EP-329 542, EP-309 316, FR-2 679 859, FR-2 674 207, FR-2 662 132, FR-2 664 223, FR-2 620 996.

Les volants de direction servent fréquemment de support pour des équipements de confort ou de sécurité, sans lien fonctionnel avec la colonne de direction.

Tel est le cas, par exemple, des volants de direction formant support de sac gonflable de sécurité.

Par sac gonflable de sécurité, on désigne ici un dispositif de retenue passive formé d'une enveloppe souple gonflée en cas de choc, par un système explosif, de façon à remplir un espace devant le conducteur.

Les volants à sac gonflable intégré comprennent conventionnellement un corps formé d'une jante et de bras de liaison à un moyeu creux dans lequel un moyeu central support de sac gonflable vient se loger.

L'on peut se référer, par exemple, aux documents suivants : EP-728 652, EP-788 935, FR-2 718 699, FR-2 716 857, FR-2 709 461.

D'autres accessoires que des sacs gonflables sont parfois intégrés ou logés au creux des volants : avertisseurs, voyants lumineux etc., ces accessoires n'ayant aucun lien fonctionnel avec le volant et n'en modifiant pas fondamentalement la structure.

L'on peut se référer, par exemple, aux documents suivants : EP-744 329, EP-668 205, EP-647 540, WO-96/255 28, WO-94/112 30, FR-2 681 570, FR-2 633 239, FR-2 633 237.

Le document EP-442 091 A décrit une installation de mesure de l'angle de rotation ou du couple d'un élément rotatif ou fixe d'une machine, comportant un élément de torsion en forme de roue à rayons relié à plusieurs éléments de mesure, au moins un rayon de la roue à rayons étant coupé pour que les parties du ou des rayons soient appliquées l'une contre l'autre lors du déplacement d'une flexion prédéterminée des autres rayons. Le dispositif de mesure met en oeuvre les courants de Foucault.

Ce document divulgue notamment les caractéristiques suivantes des moyens de mesure définis dans la revendication 1:
- un premier anneau extérieur déplaçable;
- un second anneau extérieur sensiblement non contraint placé à distance de l'anneau extérieur déplaçable;
- un anneau intérieur solidarisé en rotation à l'arbre sur lequel s'applique le couple à mesurer, l'anneau extérieur déplaçable étant apte à être solidaire rigidement de l'élément d'entaînement de l'arbre, l'anneau extérieur déplaçable étant assemblé à l'anneau intérieur par au moins un moyen déformable élastiquement;
- l'anneau extérieur sensiblement non contraint étant assemblé á l'anneau intérieur par au moins un moyen sensiblement non contraint; et
- le capteur comprenant des moyens de mesure des petits déplacements relatifs de l'anneau extérieur déplaçable par rapport à l'anneau extérieur sensiblement non contraint lorsqu'un couple est appliqué sur l'arbre via l'élément d'entraînement.

L'invention se rapporte à une structure de volant instrumenté, le capteur intégré ou rapporté à la structure ou armature du volant étant un capteur de couple ou couplemètre.

A cette fin, l'armature de volant selon l'invention comporte les caractéristiques définies dans la revendication 1.

Les moyens de mesure des contraintes appliquées à l'arbre de direction par la manoeuvre du volant comprennent au moins un capteur de couple.

Dans un mode de réalisation, l'arbre de direction est un élément d'une colonne de direction reliant mécaniquement les roues au volant de direction.

Dans un autre mode de réalisation, l'arbre de direction, est un arbre principal d'un dispositif de direction découplée.

Selon une caractéristique, le moyen de mesure des contraintes appliquées à l'arbre de direction par la manoeuvre du volant est un capteur de petits déplacements.

L'armature comprend une jante annulaire et au moins un bras reliant la jante au moyen de mesure des contraintes.

L'armature comprend au moins une poignée ergonomique de saisie du volant.

La poignée est fixée par des organes de serrage à la périphérie du volant ou sur l'un des bras du volant.

La poignée supporte des moyens de commande d'organes du véhicule.

La jante comprend au moins deux tubes en portion d'anneau sensiblement complémentaires, chaque tube comportant une portion de la jante et au moins une partie extrême repliée radialement formant au moins une partie d'un bras de l'armature.

Les bras radiaux sont assemblés à la jante, la partie extrême d'un ou de chaque bras étant insérée dans une lumière correspondante de la jante, dans un mode de réalisation.

Dans un autre mode de réalisation, le ou les bras radiaux sont en tôle emboutie, la partie extrême d'un ou de chaque bras étant enroulée sur la jante et soudée à celle-ci.

L'armature comporte des moyens d'assemblage d'un dispositif à sac gonflable de sécurité.

En variante, l'armature comporte des moyens d'assemblage soit avec un insert enrobé dans un rembourage, un mécanisme à sac gonflable de sécurité étant enrobé dans le rembourrage, soit avec une plaque reliant les moyens de saisie du volant à l'arbre de direction.

Le capteur de couple comporte :
- un premier anneau extérieur déplaçable ;
- un second anneau extérieur, sensiblement non contraint placé à distance de l'anneau extérieur déplaçable ;
- un anneau intérieur solidarisé en rotation de l'arbre de direction sur lequel s'applique le couple à mesurer, l'anneau extérieur déplaçable étant apte à être solidaire rigidement de l'armature du volant, l'anneau extérieur déplaçable étant assemblé à l'anneau intérieur par au moins un moyen déformable élastiquement ;
- l'anneau extérieur, sensiblement non contraint étant assemblé à l'anneau intérieur par au moins un moyen sensiblement non contraint ;
- le capteur comprenant des moyens de mesure des petits déplacements relatifs de l'anneau extérieur déplaçable par rapport à l'anneau extérieur sensiblement non contraint lorsqu'un couple est appliqué sur l'arbre de direction via l'armature du volant.

D'autres objets et avantages de l'invention apparaîtront au cours de la description suivante de modes de réalisation, description qui va être faite en se référant aux dessins annexés dans lesquels :
- la figure 1 est une vue schématique en perspective éclatée d'un dispositif de direction de véhicule comprenant un volant, un capteur de couple rapporté, selon un mode de réalisation de l'invention ;

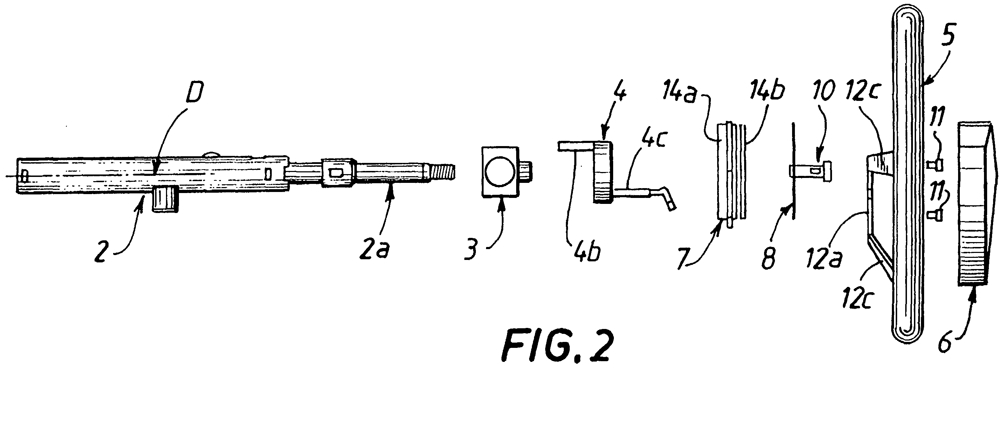

- la figure 2 est une vue latérale schématique, éclatée, correspondant à la figure 1 ;
- la figure 3 est une vue en perspective d'un moyeu à corps d'épreuve en flexion selon un mode de réalisation ;
- la figure 4 est une vue correspondante à la figure 1, le moyeu à corps d'épreuve en flexion étant intégré au volant et non rapporté à celui-ci ;

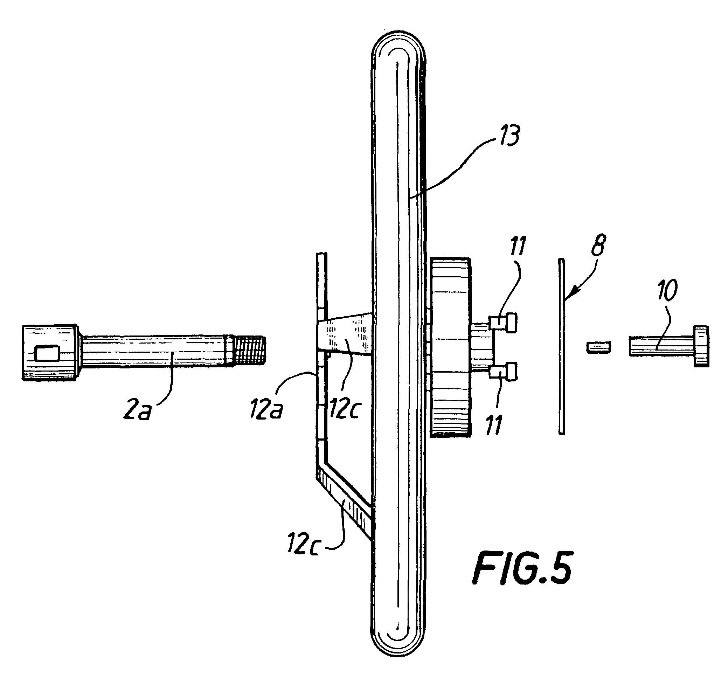

- la figure 5 est une vue latérale schématique, éclatée, correspondant à la figure 4 ;

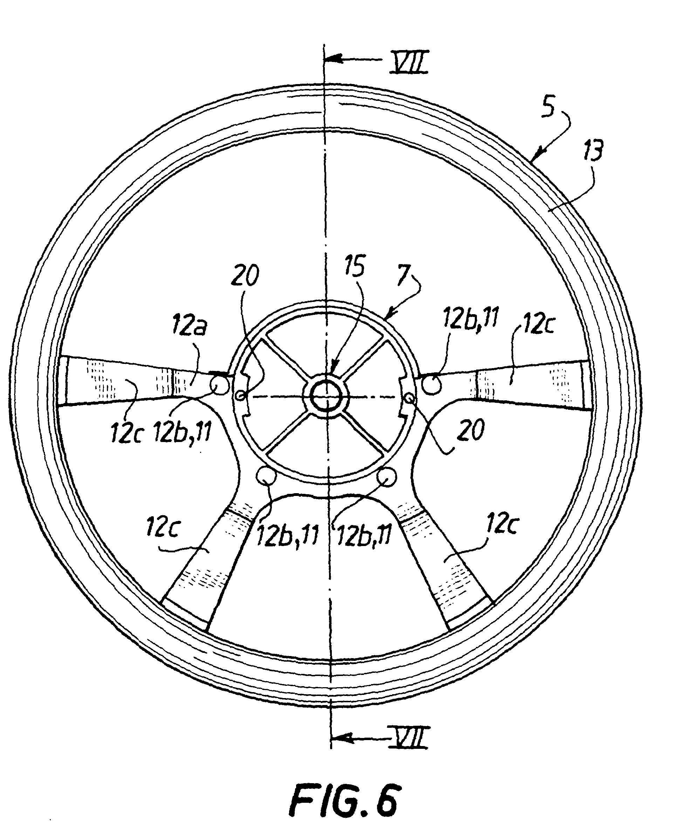

- la figure 6 est une vue de face de l'ensemble volant, moyeu tel que représenté en figure 4 ;

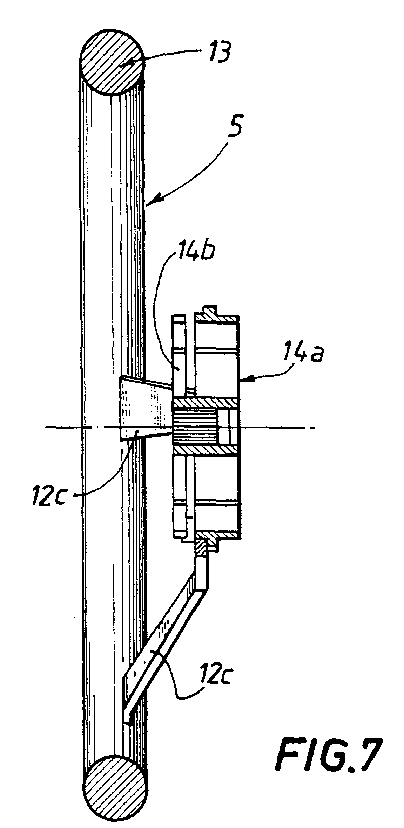

- la figure 7 est une vue en coupe transversale selon la ligne VII-VII de la figure 6 ;
- la figure 8 est une vue en perspective schématique, éclatée, d'un dispositif de direction comportant le moyeu à corps d'épreuve en torsion ;

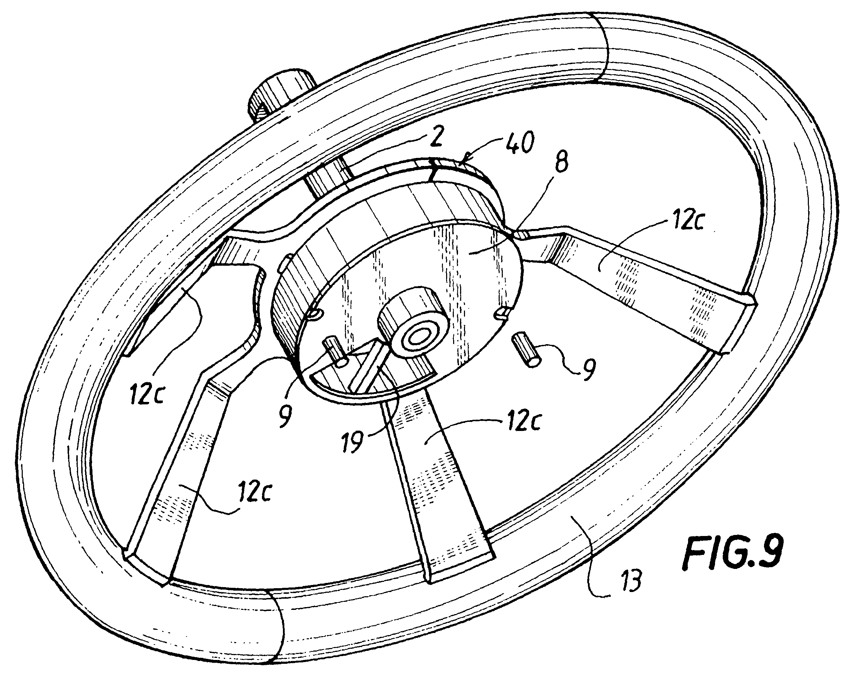

- la figure 9 est une vue en perspective du dispositif représenté en figure 8, en position assemblée, les capteurs étant sortis de leur logement ;

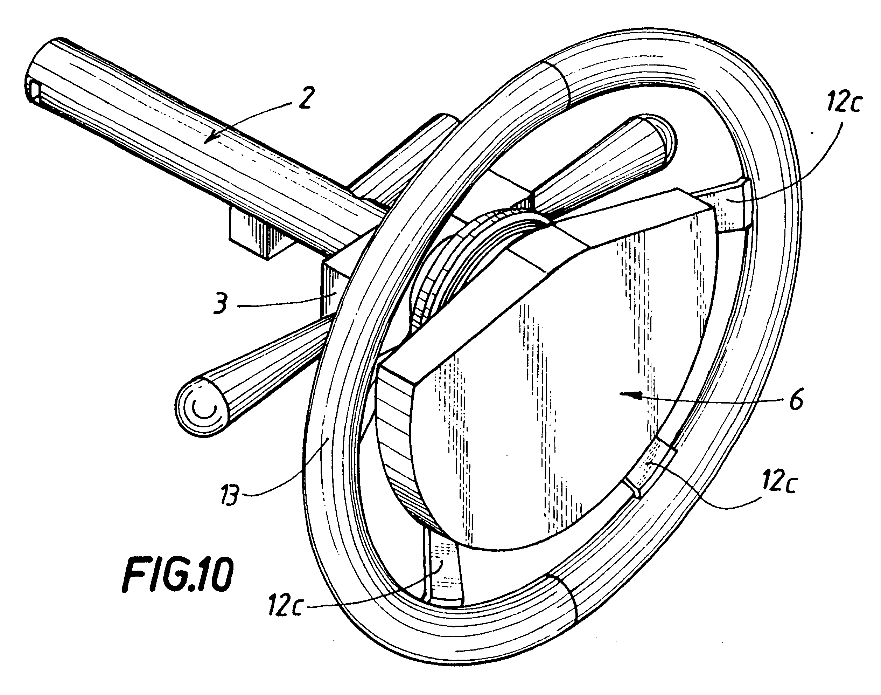

- la figure 10 est une vue en perspective d'un dispositif de direction, correspondant aux figures 1, 4 et 8, le boîtier de coussin gonflable de sécurité étant disposé dans la partie centrale du volant ;

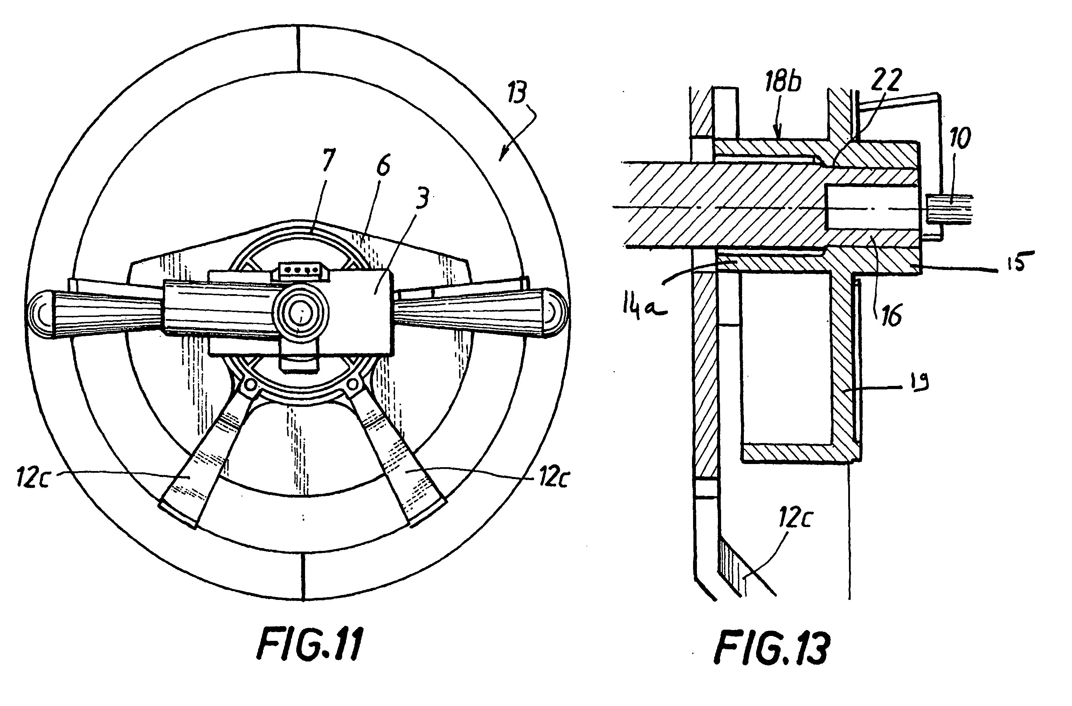

- la figure 11 est une vue arrière selon la flèche A du dispositif représenté en figure 1, après assemblage ;

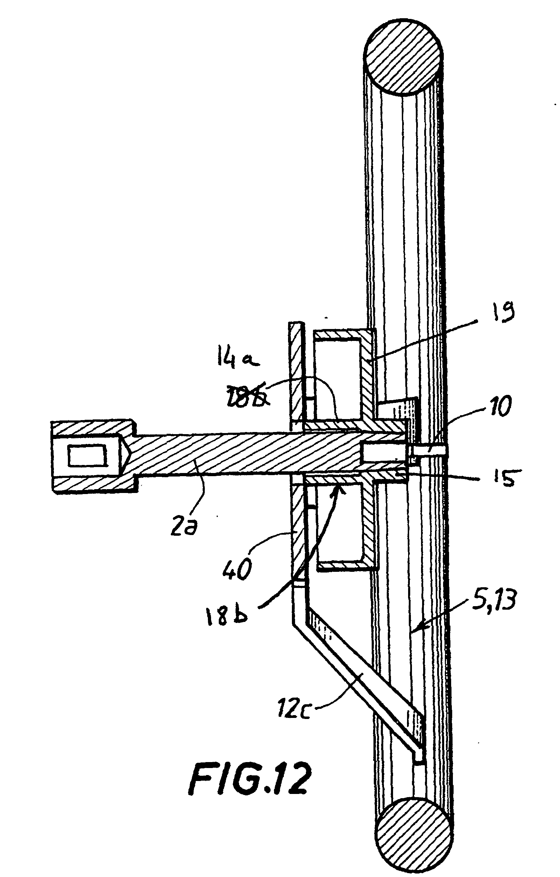

- les figures 12 et 13 sont des vues en coupe transversales d'un dispositif de direction, selon un mode de réalisation ; la figure 13 étant une vue de détail de la figure 12.

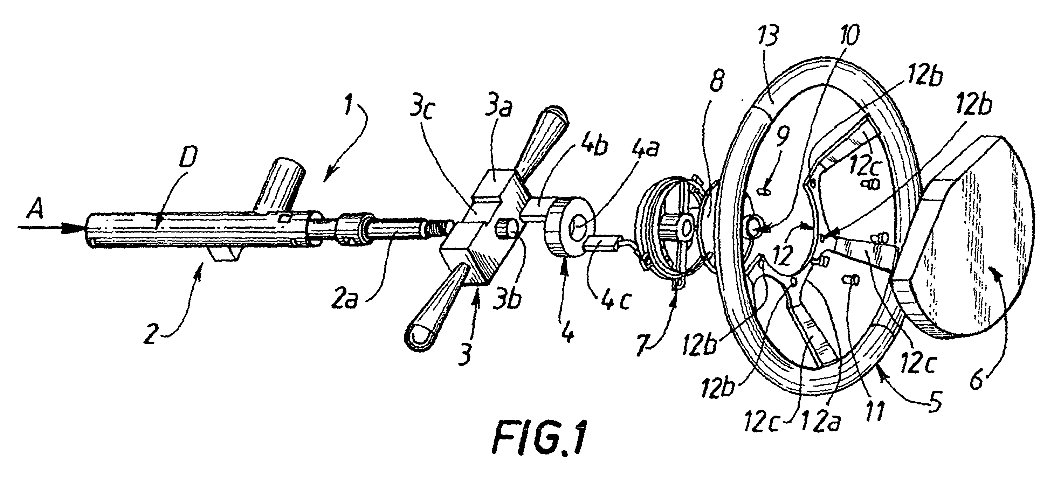

L'on se rapporte tout d'abord à la figure 1.

Le dispositif de direction 1, représenté schématiquement en perspective éclatée sur la figure 1 est destiné à être intégré dans un véhicule, par exemple une automobile.

Ce dispositif 1 comprend une colonne de direction 2. Cette colonne 2 peut être télescopique. le cas échéant, et/ou d'inclinaison variable par rapport à la carrosserie et au conducteur.

Au dispositif de direction est associé un ensemble de commande sous volant 3.

L'ensemble de commande sous volant 3 comprend un bloc central 3a comportant un trou traversant 3b de diamètre tel que l'ensemble 3 peut être ajusté sur la partie extrême 2a de l'arbre de transmission de la colonne 2.

Dans le mode de réalisation représenté, la partie extrême 2a de l'arbre de transmission est de section transversale sensiblement circulaire, le trou traversant 3b étant également circulaires en section transversale i.e. perpendiculaire à l'axe principal D du dispositif de direction 1.

Le dispositif de direction 1 comprend un connecteur tournant 4 pourvu de deux broches 4b, 4c et d'un trou central traversant 4a.

La broche 4b est destinée à être maintenue en position dans une rainure 3c ménagée sur le bloc central 3a de l'ensemble de commande sous volant 3.

Le dispositif de direction 1 comprend un couplemètre dont le corps d'épreuve est intégré dans le moyeu 7 du volant 5.

Le cas échéant, ainsi qu'il est représenté en figure 1, le volant 5 comporte en sa partie centrale, un boîtier de coussin gonflable de sécurité 6.

Dans ce cas, le connecteur tournant 4 peut servir à la connexion du boîtier de coussin gonflable 6 ainsi qu'à la connexion entre le circuit électronique 8 du couplemètre de servodirection et le moyen d'assistance (moteur électrique, dispositif de commande du circuit hydraulique...).

Le connecteur électrique tournant peut être du type comportant un premier élément de boîtier fixe, un second élément de boîtier, concentrique au premier élément de boîtier fixe, et mobile en rotation par rapport à celui-ci, et un organe conducteur électrique souple enroulé en spirale entre l'élément fixe et l'élément mobile du boîtier.

Le dispositif de direction 1 peut, dans certains modes de réalisation, être dépourvu de boîtier de coussin gonflable.

Le volant 5 comporte une jante 13 et une armature 12.

Dans le mode de réalisation représenté, l'armature 12 se présente sous la forme d'un arceau transversal 12a relié à la jante 13 par quatre bras inclinés 12c.

L'arceau transversal 12a est percé de trous traversants 12b permettant le passage des vis 11 de fixation du moyeu 7 sur le volant 5.

Dans d'autres modes de réalisation, le moyeu est venu de matière avec l'armature du volant 5 et n'est pas rapporté sur ce dernier.

La jante 13 du volant 5 peut être, dans certains modes de réalisation, formée à partir d'au moins deux tubes en portions d'anneaux sensiblement complémentaires, chaque tube comportant une portion incurvée formant une portion de la jante, à chaque extrémité de laquelle est prévue une portion repliée radialement dont une extrémité supporte des moyens de liaison avec le moyeu.

L'armature du volant 5 peut être réalisée en alliage d'aluminium, en alliage à base de magnésium, en thermoplastique semi-cristallin, en matériau composite à matrice métallique, ou tout autre matériau équivalent.

Dans un mode de réalisation, l'armature du volant est réalisée en tôle emboutie.

Le cas échéant, le squelette métallique ou autre du volant 5 peut être revêtu d'une enveloppe expansée en matière plastique, par exemple surmoulée sur le squelette.

Dans certains modes de réalisation, le volant peut comporter des parties revêtues d'un ou plusieurs produits naturels, en particulier du plaquage de cuir, de bois précieux.

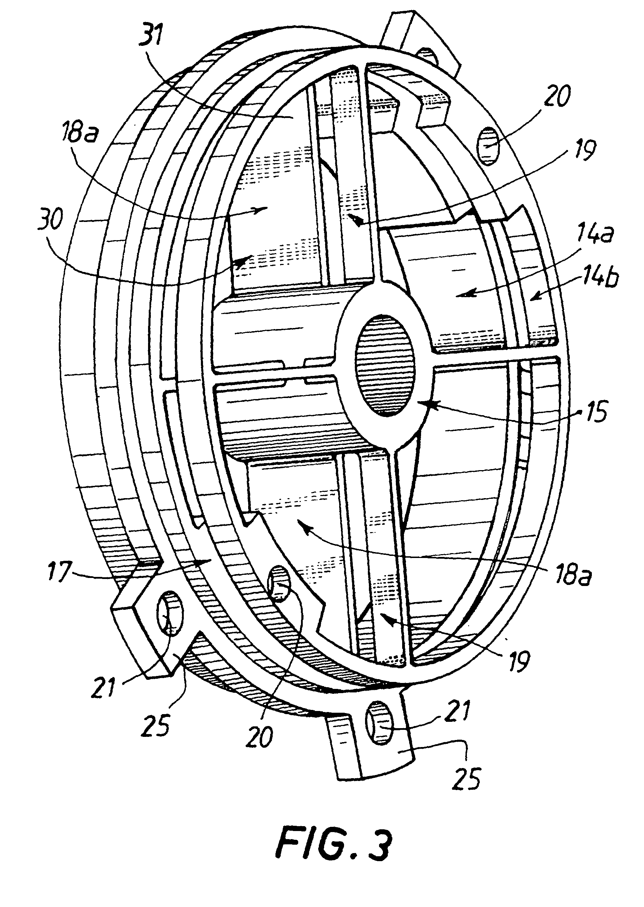

Le moyeu 7 va maintenant être décrit en référence aux figures 3 et suivantes.

Dans un premier mode de réalisation, le moyeu 7 comporte un corps d'épreuve en flexion.

Le moyeu 7 comporte un anneau intérieur 15 cylindrique et deux anneaux extérieurs 14a, 14b reliés à l'anneau intérieur 15 par des poutres élastiques déformables en flexion 18a et des poutres non déformées 19.

Plus précisément, l'anneau extérieur arrière 14a, fixé au moyeu 7 du volant 5 par des vis 11 passant dans les trous 21 est relié à l'anneau intérieur 15 par l'intermédiaire de poutres élastiques déformables en flexion 18a.

Les anneaux extérieurs 14a, 14b sont sensiblement coaxiaux et de même diamètre moyen.

Dans le mode de réalisation représenté, les poutres déformables 18a sont au nombre de quatre, régulièrement réparties perpendiculairement à l'axe principal D.

Dans d'autres modes de réalisation, non représentés, les poutres déformables sont au nombre de deux, trois ou plus de quatre.

L'anneau extérieur avant 14b est relié à l'anneau intérieur 15 par le biais de poutres radiales non déformées 19, d'un voile ou de tout autre moyen de liaison sensiblement rigide.

Dans le mode de réalisation représenté, les poutres non déformées 19 sont au même nombre que les poutres déformables élastiquement en flexion 18a, les poutres 18a, 19 étant situées sensiblement selon deux plans radiaux perpendiculaires à l'axe principal D.

Dans d'autres modes de réalisations, non représentés, les poutres 19 sont au nombre de deux, trois ou plus de quatre, le nombre de poutres 18a étant de quatre.

Dans d'autres modes de réalisation, l'épaisseur et ou la hauteur d'au moins une poutre déformable élastiquement 18a varie depuis son pied 30 jusqu'à sa tête 31.

L'anneau extérieur déplaçable 14a du moyeu 7 est associé rigidement à l'arceau 12a du volant 5, les vis 11 passant au travers des trous 12b de l'arceau pour atteindre les trous 21 prévus dans les pattes d'attache 25 de l'anneau extérieur 14a.

Dans le même temps, une vis 10 fixe le volant 5 sur la colonne 2, l'ensemble de commande sous volant 3, le connecteur tournant 4, le moyeu 7, se trouvant pris en sandwich entre l'arceau 12a du volant 5 et la colonne de direction 2, sur une longueur correspondant à la partie extrême 2a de l'arbre de transmission de cette colonne 2.

Le circuit électronique 8 peut être rapporté par collage ou tout autre moyen équivalent, en face avant du moyeu 7.

Lorsque le conducteur exerce un effort sur la jante 13 du volant 5, l'anneau extérieur arrière 14a solidaire du volant 5 entraîne une déformation en flexion des poutres 18a, déformation d'autant plus forte que le couple résistant sur l'arbre de transmission de la colonne 2 est important.

L'anneau extérieur avant 14b, quant à lui, reste sensiblement non contraint, sa position pouvant ainsi servir de base de référence pour la mesure de déplacement de l'anneau extérieur 14a.

L'anneau extérieur avant 14b porte des capteurs 9 de petits déplacements, de l'ordre de quelques microns à quelques dizaines de microns au minimum.

Dans le mode de réalisation représenté, ces capteurs sont au nombre de deux et sont disposés dans des logements 20, axiaux, ménagés dans l'anneau avant 14b, au droit de l'anneau 14a.

Ces capteurs 9 peuvent être de tout type approprié : capteurs optiques, capacitifs, électromagnétiques etc.

Dans un mode de réalisation, ces capteurs sont à effet Hall.

Dans un autre mode de réalisation, ces capteurs sont des sondes à magnétorésistance (MR) ou à magnétorésistance géante (GMR).

Bien qu'une seule sonde à effet Hall 9 puisse suffire à la mesure des petits déplacements, on peut, pour des raisons de fiabilité, disposer dans l'entrefer de mesure 17 plusieurs sondes afin de créer une redondance.

Chacune des sondes à effet Hall peut posséder son propre circuit électronique associé.

Par comparaison ou combinaison des signaux délivrés par deux, trois ou quatre sondes différentes, on peut détecter une défaillance éventuelle de l'une des sondes et assurer une excellente fiabilité au couplemètre.

Le nombre de poutres déformables 18a, leur répartition angulaire, l'épaisseur et la hauteur des poutres, le matériau employé pour les réaliser, conditionnent, ainsi qu'il apparaît à l'homme du métier, les caractéristiques suivantes :
- module d'inertie ;
- contrainte maximale dans les poutres, pour un couple maximum donné, par exemple à rupture ;
- valeur du couple minimum mesurable, par une technique de mesure de petit déplacement donnée.

Le corps d'épreuve peut être réalisé en un matériau choisi parmi le groupe comprenant les aciers, les fontes, les alliages d'aluminium, les alliages de magnésium.

Un acier 35NCD16, une fonte à graphite sphéroïdal, un aluminium de la série 7000 peuvent par exemple être envisagés.

Le corps d'épreuve peut être moulé ou usiné, en fonction du matériau employé, de la géométrie des poutres, du coût admissible notamment. ainsi que l'homme du métier pourra le déterminer.

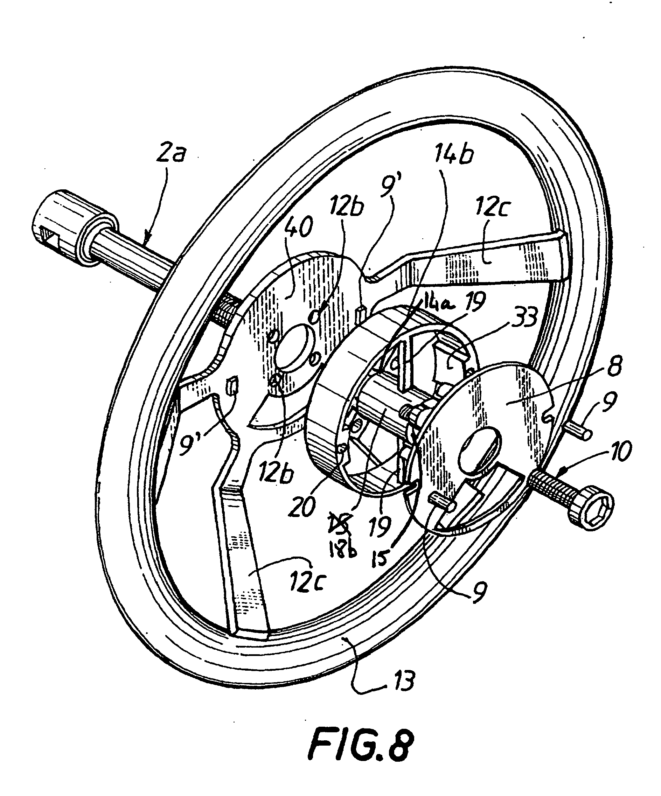

L'on se réfère maintenant à la figure 8 qui illustre un mode de réalisation d'un moyeu à corps d'épreuve en torsion.

Le moyeu 7 comporte un anneau extérieur non contraint 14b de surface périphérique externe sensiblement cylindrique.

Cet anneau 14b est pourvu de deux logements 20 ménagés dans deux surépaisseurs 33 diamétralement opposées.

Entre ces surépaisseurs 33, la surface interne de l'anneau 14b est sensiblement cylindrique.

L'anneau 14b est assemblé à l'anneau intérieur 15 par au moins une poutre 19, un voile ou tout élément de liaison sensiblement rigide.

Dans le mode de réalisation représenté, deux poutres radiales 19 ou un voile, venues de matière avec l'anneau interne 15 et l'anneau extérieur non contraint 14b associent ces deux anneaux 15, 14b.

Les poutres 19 sont de section carrée sensiblement constante de leur pied à leur tête et sont sensiblement alignées, dans le mode de réalisation représenté.

L'anneau interne 15 comporte un trou traversant définissant un embout cannelé 16 de fixation et, à l'opposé, une surface d'appui 22 de l'embout cannelé de l'arbre de transmission de la colonne 2 de direction, lorsque le corps d'épreuve est destiné à être incorporé dans une colonne de direction.

Un tube déformé en torsion 18b relie l'anneau interne 15 à l'anneau extérieur déformable 14a.

Cet anneau extérieur déformable 14a est assemblé rigidement aux moyens d'application du couple sur la colonne 2, à savoir le volant 5.

Des vis 11 assurent, via les trous 21, la fixation du moyeu 7 sur la plaque centrale transversale 40 de l'armature 12 du volant 5.

Cette plaque 40 est pourvue de trous 12b correspondant au trou 21 du moyeu 7.

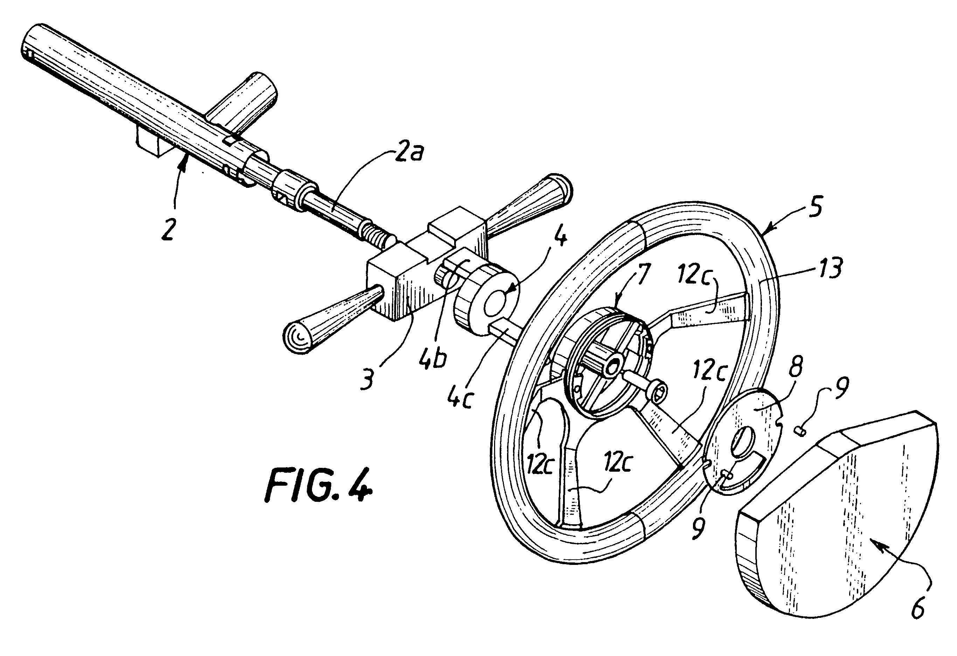

L'armature 12 du volant comporte, tout comme dans les modes de réalisation présentés aux figures 1 et 4, plusieurs bras inclinés 12c reliant la plaque centrale transversale 40 à la jante 13 du volant 5.

Lorsque le moyeu 7 est monté sur un volant 5, de la manière représentée en figure 8, l'anneau extérieur déplaçable 14a, solidaire de la plaque 40 et donc de la jante 13 du volant 5 est déplacé en rotation par rapport à l'anneau extérieur non contraint 14b.

La mesure de ce petit déplacement, par exemple par le biais de sondes de Hall, 9, placées dans les logements 20 et d'aimants 9' fixés en regard sur la plaque 40, permet la mesure du couple appliqué par le conducteur et permet la commande de l'assistance de direction après traitement du signal par le circuit électronique 8.

Les poutres déformables élastiquement 18a se présentent, dans certains modes de réalisation, sous forme de serpentins.

Ces serpentins présentent plusieurs coudes séparés par des secteurs rectilignes ou en arc de cercle concentriques.

Ces serpentins s'étendent, dans certaines réalisations, sensiblement dans un même plan perpendiculaire à l'axe de l'arbre de transmission.

Les poutres déformables en flexion décrites ci-dessus comportent dans certains modes de réalisation, des découpes.

Lors de l'application d'un couple sur le volant 5, seules les poutres 18a non découpées en deux tronçons transmettent les efforts, les deux tronçons des poutres découpées ne transmettant un effort de flexion que lorsqu'un couple appliqué seuil est dépassé.

La réalisation de ces découpes permet l'emploi du capteur comme limiteur de couple et peut permettre par ailleurs ou simultanément l'emploi de ce capteur pour plusieurs gammes de mesure de couple.

La rigidité du couplemètre augmente en effet dès lors qu'un plus grand nombre de poutres passent de l'état non contraint (deux tronçons écartés) à un état contraint (les deux tronçons des poutres sont en contact). La rigidité augmente ainsi lorsque le couple appliqué augmente, limitant l'amplitude de déformation de l'anneau déplaçable 14a.

## Revendications

1. Armature de volant de direction, notamment de véhicule automobile comportant :
- des moyens ergonomiques de saisie (13) du volant (5) pour commander la rotation d'un arbre de direction (2);
- des moyens de montage de l'armature de volant sur ledit arbre de direction ;
- des moyens de mesure des contraintes appliquées à l'arbre de direction par la manoeuvre du volant ;
dans laquelle les moyens de mesure comprennent au moins un capteur de couple comprenant :
- un premier anneau extérieur déplaçable (14a) ;
- un second anneau extérieur, sensiblement non contraint (14b) placé à distance de l'anneau extérieur déplaçable (14a) ;
- un anneau intérieur (15) solidarisé en rotation de l'arbre de direction sur lequel s'applique le couple à mesurer, l'anneau extérieur déplaçable (14a) étant apte à être solidaire rigidement de l'armature du volant, l'anneau extérieur déplaçable (14a) étant assemblé à l'anneau intérieur (15) par au moins un moyen déformable élastiquement (18a, 18b) ;
- l'anneau extérieur, sensiblement non contraint (14b) étant assemblé à l'anneau intérieur (15) par au moins un moyen sensiblement non contraint ;
- le capteur comprenant des moyens de mesure (9, 9') des petits déplacements relatifs de l'anneau extérieur déplaçable (14a) par rapport à l'anneau extérieur sensiblement non contraint (14b) lorsqu'un couple est appliqué sur l'arbre de direction via l'armature du volant ;
l'anneau déplaçable (14a), l'anneau extérieur sensiblement non contraint (14b) et l'anneau intérieur (15) étant venus de matière avec leurs éléments de liaison (17a, 18b, 19), l'anneau extérieur sensiblement non contraint (14b) portant les moyens de mesure (9).

2. Armature de volant de direction selon la revendication 1, **caractérisée en ce que** le moyen déformable élastiquement associant le premier anneau extérieur déplaçable (14a) et l'anneau intérieur (15) est une poutre (18a) s'étendant radialement de l'anneau intérieur (15) vers l'anneau extérieur déplaçable (14a).

3. Armature de volant de direction selon la revendication 2, **caractérisée en ce qu'**il comporte plusieurs poutres (18a) déformables élastiquement, s'étendant radialement de l'anneau intérieur (15) vers le premier anneau extérieur déplaçable (14a).

4. Armature de volant de direction selon la revendication 3, **caractérisée en ce que** les poutres (18a) sont équidistantes les unes des autres.

5. Armature de volant de direction selon l'une quelconque des revendications 2 à 4, **caractérisée en ce que** la hauteur d'au moins une poutre déformable élastiquement (18a) varie depuis son pied (30) jusqu'à sa tête (31).

6. Armature de volant de direction selon l'une quelconque des revendications 2 à 5, **caractérisée en ce que** l'épaisseur d'au moins une poutre déformable élastiquement (18a) varie depuis son pied (30) jusqu'à sa tête (31).

7. Armature de volant de direction selon l'une quelconque des revendications 1 à 6, **caractérisée en ce que** le moyen sensiblement non contraint associant le second anneau extérieur sensiblement non contraint (14b) et l'anneau intérieur (15) est une poutre (19) s'étendant radialement de l'anneau intérieur (15) vers le second anneau extérieur sensiblement non contraint (14b).

8. Armature de volant de direction selon la revendications 7, **caractérisée en ce qu'**il comporte plusieurs poutres (19) sensiblement libres de contrainte s'étendant radialement de l'anneau intérieur (15) vers le second anneau extérieur non contraint (14b) et les reliant.

9. Armature de volant de direction selon la revendications 8, **caractérisée en ce que** les poutres (19) sensiblement libres de contrainte sont équidistantes les unes des autres.

10. Armature de volant de direction selon la revendication 9, **caractérisée en ce que** les poutres sensiblement libres de contraintes (19) sont sensiblement disposées dans les mêmes plans radiaux que les poutres déformables (18a).

11. Armature de volant de direction selon la revendications 9, **caractérisée en ce que** les poutres sensiblement libres de contrainte (19) sont de géométrie sensiblement identique à celles des poutres déformables élastiquement (18a).

12. Armature de volant de direction selon la revendication 10 ou 11, **caractérisée en ce que** les poutres déformables élastiquement (18a) et les poutres sensiblement libres de contrainte (19) sont chacune au nombre de quatre.

13. Armature de volant de direction selon la revendication 1, **caractérisée en ce que** le moyen déformable élastiquement associant l'anneau extérieur déplaçable (14a) à l'anneau intérieur (15) est un tube déformable en torsion (18b).

14. Armature de volant de direction selon la revendication 13, **caractérisée en ce que** le moyen sensiblement non contraint associant le second anneau extérieur (14b) à l'anneau intérieur (15) est une poutre (19) s'étendant radialement de l'anneau intérieur (15) vers l'anneau extérieur déplaçable (14a).

15. Armature de volant de direction selon la revendication 14, **caractérisée en ce que** deux poutres radiales (19) disposées suivant un diamètre de l'anneau extérieur sensiblement non contraint (14b) le relient à l'anneau intérieur (15).

16. Armature de volant de direction selon l'une quelconque des revendications 1 à 15, **caractérisée en ce que** les moyens de mesure du petit déplacement relatif du premier anneau extérieur déplaçable (14a) par rapport au second anneau extérieur, sensiblement non contraint (14b) sont choisis parmi le groupe comprenant : les détecteurs optiques, les détecteurs électromagnétiques, les détecteurs cacitifs et équivalents.

17. Armature de volant de direction selon la revendication 16, **caractérisée en ce que** les moyens de mesure comprennent au moins une sonde à effet Hall (9) disposée dans un logement (20) du second anneau extérieur, sensiblement non contraint (14b).

18. Armature de volant de direction selon la revendication 16 ou 17, **caractérisée en ce que** le capteur de couple est associé à un circuit électronique (8) de traitement du signal issu des moyens de mesure.

19. Armature de volant de direction selon la revendication 18, **caractérisée en ce qu'**un connecteur tournant sert à la connexion du boîtier de coussin gonflable ainsi qu'à la connexion entre le circuit électronique du couplemètre de servodirection et le moyen d'assistance.

20. Armature de volant selon la revendication 19, **caractérisée en ce que** le connecteur tournant comporte un premier élément de boîtier fixe, un second élément de boîtier, concentrique au premier élément de boîtier fixe, et mobile en rotation par rapport à celui-ci, et un organe conducteur électrique souple enroulé à spirale entre l'élément fixe et l'élément mobile du boîtier.

21. Armature de volant de direction selon l'une quelconque des revendications 1 à 20, **caractérisée en ce que** l'arbre de direction (2) est un élément d'une colonne de direction reliant mécaniquement les roues au volant de direction (5).

22. Armature de volant de direction selon l'une quelconque des revendications 1 à 20, **caractérisée en ce que** l'arbre de direction est un arbre principal d'un dispositif de direction découplée.

23. Armature de volant de direction selon l'une quelconque des revendications 1 à 22, **caractérisée en ce qu'**elle comprend une jante annulaire (13) et au moins un bras (12) reliant la jante au moyen de mesure des contraintes.

24. Armature de volant de direction selon l'une quelconque des revendications 1 à 23, **caractérisée en ce qu'**elle comprend au moins une poignée ergonomique de saisie du volant.

25. Armature de volant de direction selon la revendication 24, **caractérisée en ce que** la poignée est fixée par des organes de serrage à la périphérie du volant ou sur l'un des bras du volant.

26. Armature de volant de direction selon la revendication 24 ou 25, **caractérisée en ce que** la poignée supporte des moyens de commande d'organes du véhicule.

27. Armature de volant de direction selon l'une quelconque des revendications 23 à 26, **caractérisée en ce que** la jante (13) comprend au moins deux tubes en portion d'anneau sensiblement complémentaires, chaque tube comportant une portion incurvée formant une portion de la jante et au moins une partie extrême repliée radialement formant au moins une partie d'un bras de l'armature.

28. Armature de volant de direction selon l'une quelconque des revendications 23 à 26, **caractérisée en ce qu'**elle comprend au moins deux bras (12) sensiblement radiaux.

29. Armature de volant de direction selon l'une quelconque des revendications 23 à 28, **caractérisée en ce que** les bras radiaux sont assemblés à la jante.

30. Armature de volant de direction selon la revendication 29, **caractérisée en ce que** la partie extrême d'un ou de chaque bras est insérée dans une lumière correspondante de la jante.

31. Armature de volant de direction selon la revendication 29, **caractérisée en ce que** le ou les bras (12) radiaux sont en tôle emboutie, la partie extrême d'un ou de chaque bras étant enroulée sur la jante et soudée à celle-ci.

32. Armature de volant de direction selon l'une quelconque des revendications 23 à 30, **caractérisée en ce qu'**elle est élaborée en un matériau choisi parmi le groupe comprenant : les aciers, les alliages d'aluminium, les fontes, les alliages de magnésium, les thermoplastiques, les composites à matrice métalliques.

33. Armature de volante de direction selon l'une quelconque des revendications de 1 à 32, **caractérisée en ce qu'**elle comporte des moyens d'assemblage d'un dispositif à sac gonflable de sécurité.

34. Armature de volant de direction selon la revendication 33, **caractérisée en ce qu'**elle comporte des moyens d'assemblage soit avec un insert enrobé dans un rembourrage, un mécanisme de sac gonflable de sécurité étant enrobé dans le rembourrage, soit une plaque reliant les moyens de saisie du volant à l'arbre de direction.

## Patentansprüche

1. Lenkradumhüllung, insbesondere für Kraftfahrzeuge, mit:
- ergonomischen Greifmitteln (13) des Lenkrades (5) zur Steuerung der Rotation einer Lenkwelle (2);
- Montagemittel der Lenkradumhüllung auf der genannten Lenkwelle;
- Messmittel der auf die Lenkwelle durch die Betätigung des Lenkrades ausgeübten Beanspruchungen;
in der die Messmittel wenigstens einen Drehmomentsensor umfassen mit:
- einem ersten äußeren verschiebbaren Ring (14a);
- einem zweiten äußeren, deutlich nicht beanspruchten, beabstandet vom äußeren verschiebbaren Ring (14a) platzierten Ring (14b);
- einen inneren, in Rotation fest mit der Lenkwelle, auf der das zu messende Moment angewendet wird, befestigten Ring (15), wobei der äußere verschiebbare Ring (14a) geeignet ist, steif mit der Umhüllung des Lenkrades befestigt zu werden, wobei der äußere verschiebbare Ring (14a) mit dem inneren Ring (15) durch wenigstens ein elastisch verformbares Mittel (18a, 18b) verbunden ist;
- wobei der äußere, deutlich nicht beanspruchte Ring (14b) mit dem inneren Ring (15) durch wenigstens ein deutlich nicht gesteuertes Mittel verbunden ist;
- wobei der Sensor Messmittel (9, 9') der kleinen Verschiebungen relativ zum äußeren verschiebbaren Ring (14a) im Verhältnis zum äußeren deutlich nicht beanspruchte Ring (14b) umfasst, wenn ein Moment über die Umhüllung des Lenkrades auf die Lenkwelle angewendet wird;
wobei der verschiebbare Ring (14a), der äußere, deutlich nicht beanspruchte Ring (14b) und der innere Ring (15) aus demselben Material wie ihre Verbindungselemente (17a, 18b, 19) sind, wobei der äußere, deutlich nicht beanspruchte Ring (14b) die Messmittel (9) trägt.

2. Lenkradumhüllung gemäß Anspruch 1, **dadurch gekennzeichnet, dass** das elastisch verformbare, den ersten äußeren, verschiebbaren Ring (14a) und den inneren Ring (15) zuordnende Mittel ein sich radial vom inneren Ring (15) zum äußeren, verschiebbaren Ring (14a) erstreckender Balken (18a) ist.

3. Lenkradumhüllung gemäß Anspruch 2, **dadurch gekennzeichnet, dass** sie mehrere elastisch verformbare, sich radial vom inneren Ring (15) zum ersten äußeren, verschiebbaren Ring (14a) erstreckende Balken (18a) umfasst.

4. Lenkradumhüllung gemäß Anspruch 3, **dadurch gekennzeichnet, dass** die Balken (18a) voneinander gleich weit beabstandet sind.

5. Lenkradumhüllung gemäß Anspruch 2 bis 4, **dadurch gekennzeichnet, dass** die Höhe wenigstens eines elastisch verformbaren Balkens (18a) von seinem Fuß (30) bis zu seinem Kopf (31) variiert.

6. Lenkradumhüllung gemäß Anspruch 2 bis 5, **dadurch gekennzeichnet, dass** die Dicke wenigstens eines elastisch verformbaren Balkens (18a) von seinem Fuß (30) bis zu seinem Kopf (31) variiert.

7. Lenkradumhüllung gemäß Anspruch 1 bis 6, **dadurch gekennzeichnet, dass** das deutlich nicht beanspruchte, den zweiten äußeren, deutlich nicht beanspruchte Ring (14b) und den inneren Ring (15) zuordnende Mittel ein sich radial vom inneren Ring (15) zum zweiten äußeren, deutlich nicht gesteuerten Ring (14b) erstreckt.

8. Lenkradumhüllung gemäß Anspruch 7, **dadurch gekennzeichnet, dass** sie mehrere, deutlich beanspruchungsfreie, sich radial vom inneren Ring (15) zum zweiten äußeren, nicht beanspruchten Ring (14b) erstreckende und diese verbindende Balken (19) umfasst.

9. Lenkradumhüllung gemäß Anspruch 8, **dadurch gekennzeichnet, dass** die deutlich beanspruchungsfreien Balken (19) voneinander gleich weit beabstandet sind.

10. Lenkradumhüllung gemäß Anspruch 9, **dadurch gekennzeichnet, dass** die deutlich beanspruchungsfreien Balken (19) deutlich in denselben radialen Ebenen angeordnet sind wie die verformbaren Balken (18a).

11. Lenkradumhüllung gemäß Anspruch 9, **dadurch gekennzeichnet, dass** die deutlich beanspruchungsfreien Balken (19) deutlich dieselbe Geometrie aufweisen wie die der elastisch verformbaren Balken (18a).

12. Lenkradumhüllung gemäß Anspruch 10 oder 11, **dadurch gekennzeichnet, dass** es jeweils 4 elastisch verformbare Balken (18a) und 4 deutlich beanspruchungsfreie Balken (19) gibt.

13. Lenkradumhüllung gemäß Anspruch 1, **dadurch gekennzeichnet, dass** das elastisch verformbare, den äußeren verschiebbaren Ring (14a) dem inneren Ring (15) zuordnende Mittel eine in Verdrehung verformbare Röhre (18b) ist.

14. Lenkradumhüllung gemäß Anspruch 13, **dadurch gekennzeichnet, dass** das deutlich nicht beanspruchte, den zweiten äußeren Ring (14b) dem inneren Ring (15) zuordnende Mittel ein sich radial vom inneren Ring (15) zum äußeren, verschiebbaren Ring (14a) erstreckender Balken (19) ist.

15. Lenkradumhüllung gemäß Anspruch 14, **dadurch gekennzeichnet, dass** zwei radiale, gemäß einem Durchmesser des äußeren, deutlich nicht beanspruchten Rings (14b) angeordnete Balken (19) ihn mit dem inneren Ring (15) verbinden.

16. Lenkradumhüllung gemäß Anspruch 1 bis 15, **dadurch gekennzeichnet, dass** die Messmittel der kleinen Verschiebung relativ zum ersten äußeren, verschiebbaren Ring (14a) im Verhältnis zum zweiten äußeren, deutlich nicht beanspruchten Ring (14b) aus der Gruppe ausgewählt werden, umfassend: optische Sensoren, elektromagnetische Sensoren, kapazitive Sensoren, und Äquivalente.

17. Lenkradumhüllung gemäß Anspruch 16, **dadurch gekennzeichnet, dass** die Messmittel wenigsten eine in einer Aufnahme (20) des zweiten äußeren, deutlich nicht beanspruchten Rings (14b) angeordnete Hallsonde (9) umfassen.

18. Lenkradumhüllung gemäß Anspruch 16 oder 17, **dadurch gekennzeichnet, dass** der Drehmomentsensor einem elektronischen Verarbeitungskreislauf (8) des aus den Messmitteln stammenden Signals zugeordnet ist.

19. Lenkradumhüllung gemäß Anspruch 18, **dadurch gekennzeichnet, dass** ein sich drehendes Verbindungsstück als Anschluss des Airbaggehäuses sowie als Anschluss zwischen dem elektronischen Schaltkreis des Drehmomentsmessers der Servolenkung und dem Servomittel dient.

20. Lenkradumhüllung gemäß Anspruch 19, **dadurch gekennzeichnet, dass** das sich drehende Verbindungsstück ein erstes festes Gehäuseelement, ein zweites, zum ersten festen Gehäuseelement konzentrisches und im Verhältnis zu diesem in Rotation mobiles Gehäuseelement und ein bewegliches elektrisches, spiralförmig zwischen dem festen Element und dem mobilen Element des Gehäuses aufgewickeltes Leitorgan umfasst.

21. Lenkradumhüllung gemäß Anspruch 1 bis 20, **dadurch gekennzeichnet, dass** die Lenkwelle (2) ein Element einer die Räder mit dem Lenkrad (5) mechanisch verbindende Lenksäule ist.

22. Lenkradumhüllung gemäß Anspruch 1 bis 20, **dadurch gekennzeichnet, dass** die Lenkwelle eine Hauptwelle einer entkoppelten Lenkvorrichtung ist.

23. Lenkradumhüllung gemäß Anspruch 1 bis 22, **dadurch gekennzeichnet, dass** sie ein ringförmiges Radkreuz (13) und wenigstens einen das Radkreuz mit dem Messmittel der Beanspruchungen verbindenden Arm (12) umfasst.

24. Lenkradumhüllung gemäß Anspruch 1 bis 23, **dadurch gekennzeichnet, dass** sie wenigstens einen ergonomischen Greifgriff des Lenkrades umfasst.

25. Lenkradumhüllung gemäß Anspruch 24, **dadurch gekennzeichnet, dass** der Griff durch Festklemmorgane an der Peripherie des Lenkrades oder auf einem der Arme des Lenkrades befestigt ist.

26. Lenkradumhüllung gemäß Anspruch 24 oder 25, **dadurch gekennzeichnet, dass** der Griff die Organsteuermittel des Fahrzeugs trägt.

27. Lenkradumhüllung gemäß Anspruch 23 bis 26, **dadurch gekennzeichnet, dass** das Radkreuz (13) wenigstens zwei deutlich komplementäre Röhren mit ringförmigem Abschnitt umfasst, wobei jede Röhre einen gebogenen, einen Abschnitt des Radkreuzes bildenden Abschnitt und wenigstens einen radial gekrümmten, wenigstens einen Teil eines Arms der Umhüllung bildenden Endteil umfasst.

28. Lenkradumhüllung gemäß Anspruch 23 bis 26, **dadurch gekennzeichnet, dass** sie wenigstens zwei deutlich radiale Arme (12) umfasst.

29. Lenkradumhüllung gemäß Anspruch 23 bis 28, **dadurch gekennzeichnet, dass** die radialen Arme mit dem Radkreuz verbunden sind.

30. Lenkradumhüllung gemäß Anspruch 29, **dadurch gekennzeichnet, dass** der Endteil eines oder jedes Arms in eine dem Radkreuz entsprechende Öffnung eingeführt wird.

31. Lenkradumhüllung gemäß Anspruch 29, **dadurch gekennzeichnet, dass** der radiale Arm oder die radialen Arme (12) aus bombiertem Blech ist / sind, wobei der Endteil eines oder jeden Arms auf dem Radkreuz aufgerollt ist und mit diesem verschweißt ist.

32. Lenkradumhüllung gemäß Anspruch 23 bis 30, **dadurch gekennzeichnet, dass** sie aus einem aus der Gruppe ausgewählten Material hergestellt wird, umfassend: Stähle, Aluminiumlegierungen, Gusseisen, Magnesiumlegierungen, thermoplastisches Material, Verbundmaterial mit Metallmatrix.

33. Lenkradumhüllung gemäß Anspruch 1 bis 32, **dadurch gekennzeichnet, dass** sie Zusammenbaumittel einer Sicherheitsairbagvorrichtung umfasst.

34. Lenkradumhüllung gemäß Anspruch 33, **dadurch gekennzeichnet, dass** sie Zusammenbaumittel entweder mit einem ummantelten Einsatz in einer Polsterung umfasst, wobei ein Airbagsicherheitsmechanismus in der Polsterung ummantelt ist, oder eine die Greifmittel des Lenkrades mit der Lenkwelle verbindende Platte.

## Claims

1. A steering wheel frame, particularly for a motor vehicle, having:
- ergonomic means (13) of gripping the steering wheel (5) for controlling the rotation of a steering shaft (2);
- means of mounting the steering wheel frame on the said steering shaft;
- means of measuring the stresses applied to the steering shaft by the manoeuvring of the steering wheel;
in which the measuring means comprise at least one torque sensor comprising:
- a first movable external ring (14a);
- a second external ring (14b), substantially unstressed, positioned at a distance from the movable external ring (14a);
- an internal ring (15) fixed with respect to rotation to the steering shaft to which the torque to be measured is applied, the movable external ring (14a) being able to be fixed rigidly to the steering wheel frame, the movable external ring (14a) being connected to the internal ring (15) by at least one elastically deformable means (18a, 18b);
- the substantially unstressed external ring (14b) being connected to the internal ring (15) by at least one substantially unstressed means;
- the sensor comprising means (9, 9') of measuring small relative movements of the movable external ring (14a) with respect to the substantially unstressed external ring (14b) when a torque is applied to the steering shaft via the steering wheel frame;
- the displaceable ring (14a), the substantially unstressed outer ring (14b) and the inner ring (15) being made in one piece with their connecting elements (17a, 18b, 19), the substantially unstressed outer ring (14b) carrying the means for measuring (9).

2. A steering wheel frame according to Claim 1, **characterised in that** the elastically deformable means connecting the first movable external ring (14a) and the internal ring (15) is a beam (18a) extending radially from the internal ring (15) to the movable external ring (14a).

3. A steering wheel frame according to Claim 2, **characterised in that** it includes several elastically deformable beams (18a) extending radially from the internal ring (15) to the first movable external ring (14a).

4. A steering wheel frame according to Claim 3, **characterised in that** the beams (18a) are equidistant from each other.

5. A steering wheel frame according to any one of Claims 2 to 4, **characterised in that** the height of at least one elastically deformable beam (18a) varies from its foot (30) to its head (31).

6. A steering wheel frame according to any one of Claims 2 to 5, **characterised in that** the thickness of at least one elastically deformable beam (18a) varies from its foot (30) to its head (31).

7. A steering wheel frame according to any one of Claims 1 to 6, **characterised in that** the substantially unstressed means connecting the second substantially unstressed external ring (14b) and the internal ring (15) is a beam (19) extending radially from the internal ring (15) to the second substantially unstressed external ring (14b).

8. A steering wheel frame according to Claim 7, **characterised in that** it includes several beams (19) substantially free from stress, extending radially from the internal ring (15) to the second unstressed external ring (14b) and connecting them.

9. A steering wheel frame according to Claim 8, **characterised in that** the beams (19) substantially free from stress are equidistant from each other.

10. A steering wheel frame according to Claim 9, **characterised in that** the beams substantially free from stresses (19) are substantially disposed in the same radial planes as the deformable beams (18a).

11. A steering wheel frame according to Claim 9, **characterised in that** the beams substantially free from stress (19) have a geometry substantially identical to that of the elastically deformable beams (18a).

12. A steering wheel frame according to Claim 10 or 11, **characterised in that** the elastically deformable beams (18a) and the beams substantially free from stress (19) are each four in number.

13. A steering wheel frame according to Claim 1, **characterised in that** the elastically deformable means connecting the movable external ring (14a) to the internal ring (15) is a tube which is deformable under torsion (18b).

14. A steering wheel frame according to Claim 13, **characterised in that** the substantially unstressed means connecting the second external ring (14b) to the internal ring (15) is a beam (19) extending radially from the internal ring (15) to the movable external ring (14a).

15. A steering wheel frame according to Claim 14, **characterised in that** two radial beams (19) disposed on a diameter of the substantially unstressed external ring (14b) connect it to the internal ring (15).

16. A steering wheel frame according to any one of Claims 1 to 15, **characterised in that** the means of measuring the small relative movement of the first movable external ring (14a) with respect to the second substantially unstressed external ring (14b) are chosen from amongst the group comprising optical detectors, electromagnetic detectors, capacitive detectors and equivalent.

17. A steering wheel frame according to Claim 16, **characterised in that** the measuring means comprise at least one Hall effect sensor (9) disposed in a housing (20) in the second substantially unstressed external ring (14b).

18. A steering wheel frame according to Claim 16 or 17, **characterised in that** the torque sensor is associated with an electronic circuit (8) for processing the signal coming from the measuring means.

19. A steering wheel frame according to Claim 18, **characterised in that** a rotating connector serves for the connection of the inflatable airbag box and for the connection between the electronic circuit of the power assisted steering torque meter and the power assistance means.

20. A steering wheel frame according to Claim 19, **characterised in that** the rotating connector has a first fixed casing element, a second casing element concentric with the first fixed casing element, and able to move in rotation with respect to it, and a flexible electrically conductive member wound in a spiral between the fixed element and the movable element of the casing.

21. A steering wheel frame according to any one of Claims 1 to 20, **characterised in that** the steering shaft (2) is a component of a steering column mechanically connecting the wheels to the steering wheel (5).

22. A steering wheel frame according to any one of Claims 1 to 20, **characterised in that** the steering shaft is a main shaft of a decoupled steering device.

23. A steering wheel frame according to any one of Claims 1 to 22, **characterised in that** it comprises an annular rim (13) and at least one arm (12) connecting the rim to the stress measuring means.

24. A steering wheel frame according to any one of Claims 1 to 23, **characterised in that** it comprises at least one ergonomic grip for gripping the steering wheel.

25. A steering wheel frame according to Claim 24, **characterised in that** the grip is fixed by clamping members to the periphery of the steering wheel or to one of the arms of the steering wheel.

26. A steering wheel frame according to Claim 24 or 25, **characterised in that** the grip supports means of controlling components of the vehicle.

27. A steering wheel frame according to any one of Claims 23 to 26, **characterised in that** the rim (13) comprises at least two substantially complementary tubes in the form of a portion of a ring, each tube having a curved portion forming a portion of the rim and at least one radially folded end part forming at least part of an arm of the frame.

28. A steering wheel frame according to any one of Claims 23 to 26, **characterised in that** it comprises at least two substantially radial arms (12).

29. A steering wheel frame according to any one of Claims 23 to 28, **characterised in that** the radial arms are connected to the rim.

30. A steering wheel frame according to Claim 29, **characterised in that** the end part of one or each arm is inserted in a corresponding slot in the rim.

31. A steering wheel frame according to Claim 29, **characterised in that** the radial arm or arms (12) are made of pressed sheet metal, the end part of one or each arm being wound onto the rim and welded thereto.

32. A steering wheel frame according to any one of Claims 23 to 30, **characterised in that** it is produced from a material chosen from amongst the group comprising steels, aluminium alloys, cast irons, magnesium alloys, thermoplastics or metallic-matrix composites.

33. A steering wheel frame according to any one of Claims 1 to 32, **characterised in that** it has means of connecting an inflatable airbag device.

34. A steering wheel frame according to Claim 33, **characterised in that** it has means of connection either with an insert covered in a padding, an inflatable airbag mechanism being enclosed in the padding, or a plate connecting the means of gripping the steering wheel to the steering shaft.
